Europäisches Patentamt

European Patent Office

Office européen des brevets

(11) Veröffentlichungsnummer: **0 264 891 B1**

(12) **EUROPÄISCHE PATENTSCHRIFT**

(45) Veröffentlichungstag der Patentschrift: **29.04.92**

(21) Anmeldenummer: **87115293.0**

(22) Anmeldetag: **19.10.87**

(51) Int. Cl.⁵: **A01D  25/00**, A01D 33/08

(54) **Vorrichtung zum Roden von Wurzelfrüchten.**

(30) Priorität: **17.10.86 DE 3635403**

(43) Veröffentlichungstag der Anmeldung:
**27.04.88 Patentblatt  88/17**

(45) Bekanntmachung des Hinweises auf die
Patenterteilung:
**29.04.92 Patentblatt  92/18**

(84) Benannte Vertragsstaaten:
**AT DE ES FR IT SE**

(56) Entgegenhaltungen:
**EP-A- 0 041 226      WO-A-85/02752**
**DE-A- 1 632 830      DE-B- 1 062 046**
**DE-C- 449 646        FR-A- 1 054 253**

(73) Patentinhaber: **Dietrich, Martin**
**Paternoster 5**
**W-8851 Mertingen(DE)**

(72) Erfinder: **Dietrich, Martin**
**Paternoster 5**
**W-8851 Mertingen(DE)**

(74) Vertreter: **Stoffregen, Hans-Herbert, Dr.**
**Dipl.-Phys. et al**
**Patentanwälte Strasse & Stoffregen Salz-**
**strasse 11a Postfach 2144**
**W-6450 Hanau/Main 1(DE)**

Rank Xerox (UK) Business Services
(–/2.18/2.0)

## Beschreibung

Die Erfindung bezieht sich auf eine Vorrichtung zum Roden von Wurzelfrüchten wie Zuckerrüben umfassend zumindest zwei in das Erdreich eingreifende Hauptschare mit einem jeweils vorgeschalteten Vorschar, wobei die Hauptschare einen in Fahrtrichtung der Vorrichtung V-förmig geöffneten Einlaufkanal für die Wurzelfrüchte bilden und aus jeweils eine um ihre jeweilige Längsachse sich drehende Rodewalze bestellen und wobei gegebenenfalls sowohl eine den Rodewalzen nachgeordnete Transporteinrichtung als auch eine Reinigungsstation vorgesehen ist.

Bei bekannten Vorrichtungen zum Roden von Wurzelfrüchten sind die Schare als feststehende oder auf- und abgehende Zinken ausgebildet, welche die zu rodenden Früchte zwischen sich erfassen. Hierdurch ergibt sich der Nachteil, daß nicht nur die Wurzelfrüchte, sondern auch verdichtetes Erdreich mitgefördert werden. Als Folge ist nicht nur ein Substanzverlust an Ackerboden festzustellen, sondern auch unerwünscht hohe Transportkosten, da bis zu 50 % des scheinbaren Erntegewichts an Wurzelfrüchten durch den Schmutzanteil bestimmt wird.

Eine dem Oberbegriff des ersten Anspruchs entsprechende Vorrichtung ist der EP-A-041 226 - (siehe auch WO 85/02752) zu entnehmen. Bei dieser Vorrichtung werden die Schare durch sich drehende Rodewalzen gebildet, wodurch sich der Anteil des geförderten Ackerbodens in unerwartet großem Umfang reduziert hat. In der zuletzt genannten Anmeldung ist ferner eine den Scharen nachgeordnete Transporteinrichtung beschrieben, über die die Wurzelfrüchte einer Reinigungsstation zugeführt werden.

Zur Reduzierung des Schmutzanteils wird in der DE-B-1 062 046 vorgeschlagen, einen keilförmigen Kanal bildenden Scharplatten in den Boden eingreifenden Zinken vorzuordnen. Die zinkenförmige Ausbildung stellt jedoch nicht sicher, daß das Erdreich in erforderlichem Umfang gelockert wird. Auch kann durch die Zinken ein Verstopfen des zwischen den Scharplatten verlaufenden Kanals durch mitgenommenes Unkraut oder Blätter nicht verhindert werden. Der vorliegenden Erfindung liegt das Problem zugrunde, eine Vorrichtung der eingangs beschriebenen Art so weiterzuentwickeln, daß die zu rodenden Früchte noch weitgehender vom Erdreich befreit werden. Auch soll sichergestellt sein, daß der Einlaufkeil durch Unkraut, Blätter o.ä. nicht verstopft wird.

Das Problem wird dadurch gelöst, daß jedem Hauptscharein Vorschar vorgeschaltet ist, das im wesentlichen plattenförmig ausgebildet ist und einen beim Roden im Erdreich verlaufenden im vorderen Bereich spitz zulaufenden zylinderförmigen Abschnitt aufweist, daß zumindest oberhalb des Abschnitts die Vorderkante des Vorschars schneidartig ausgebildet ist und daß unterhalb des zylinderförmigen Abschnitts das Vorschar platten- oder stegförmig ausgebildet ist und in seinen freien vorderen und unteren Bereichen als Schneide wirkt.

Durch den zylinderförmig spitz zulaufenden Abschnitt der Vorschar wird das Erdreich augelokkert, so daß die Wurselfrüchte leichter erfaßt und geordnet werden können. Durch die schneidförmigen, oberhalb des zylinderförmigen Abschnitts verlaufenden Kanten, die sich entgegen der Roderichtung nach hinten erstrecken können, ist der Vorteil gegeben, daß im Bodenbereich vorhandenes Unkraut oder Blätter mit dem Schneider ins Erdreich gezogen und abgeschnitten werden, so daß ein Verstopfen der Schar unterbleibt.

Dadurch, daß das Vorschar unterhalb des zylinderförmigen Abschnittes platten- oder Stegförmig ausgebildet ist und in seinen freien vorderen und unteren Bereichen als Schneide wirkt, ist ein sicheres Einringen des Vorschars ins Erdreich gewährleistet.

Schließlich kann von jedem Vorschar ein oberhalb des Erdreichs verlaufender und in Richtung des Hauptschars sich erstreckender Stab vorhanden sein, der ebenfalls als Führung für die Wurzelfrüchte dient.

Durch die erfindungsgemäße Vorrichtung erfolgt nicht nur ein seitliches Lockern des Erdreiches, sondern gleichzeitig werden die Wurzelfürchte freigelegt, so daß ein Ausheben insbesondere bei trockenen, lehmigen Böden erleichtert wird. Auch wird die Beschädigung der Wurzelfrüchte verringert.

Auch kann der Vorschar keilförmig ausgebildet sein, wobei bevorzugt das spitz zulaufende Ende dem nachgeordneten Schar zugewandt ist. Selbstverständlich besteht auch die Möglichkeit, das Vorschar in umgekehrter Richtung anzuordnen.

Um das Auflockern des Erdreiches zu verstärken, kann nach einer weiteren Ausgestaltung der Erfindung jedes Vorschars in Vibration versetzt werden.

Entsprechend der Anordnung der einen V-förmig geöffneten Einlaufkeil bildenden (Haupt)-Schare können die Vorschare, insbesondere ihre hinteren Enden ebenfalls V-förmig angeordnet sein. Auch können die Ebenen der plattenförmig ausgebildeten Vorscharen unter einem von 90° abweichenden Winkel das Erdreich durchstechen.

Die von den Hauptscharen sodann angehobenen Wurzelfrüchte können z. B. übereinen elastische Kanten aufweisenden Drehflügler einer Transporteinrichtung zugeführt werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten bevorzugten Ausführungsformen.

Es zeigen:

Fig. 1    eine Prinzipdarstellung einer ersten Ausführungsform einer Vorrichtung zum Roden von Wurzelfrüchten,

Fig. 2    eine Prinzipdarstellung einer zweiten Ausführungsform,

Fig. 3    eine Detaildarstellung der Vorrichtung im Bereich der Schare,

Fig. 4    eine Ausführungsform eines Vorschars und

Fig. 5    die Anordnung nach Fig. 4 in Draufsicht.

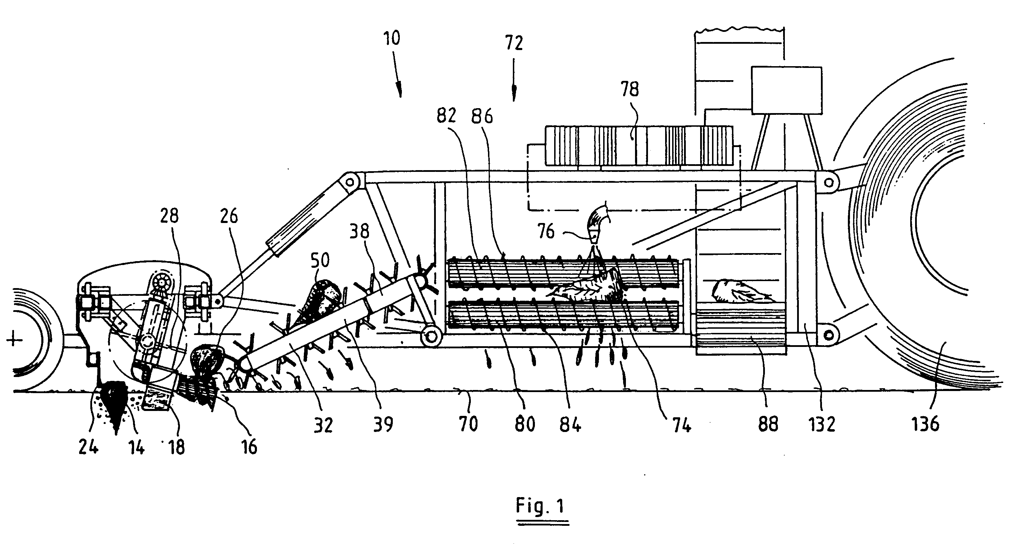

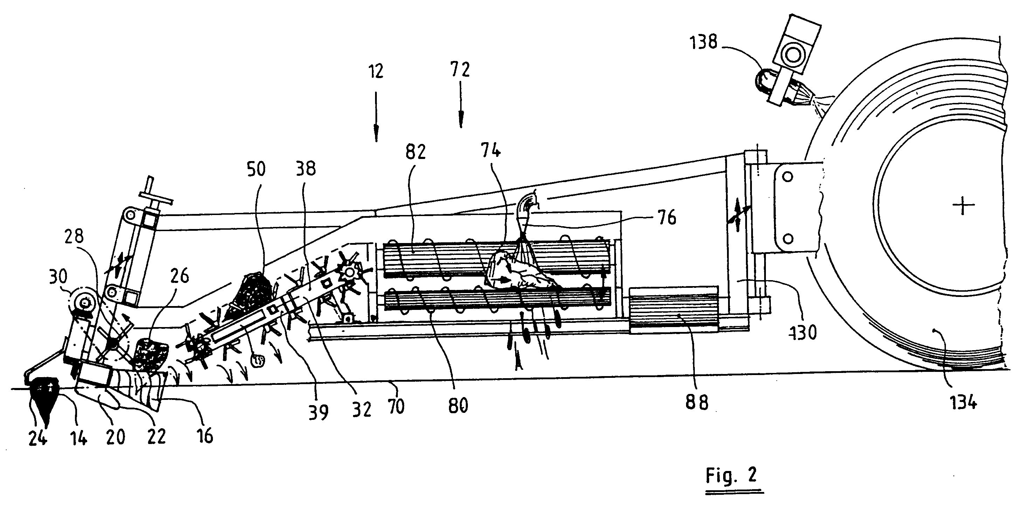

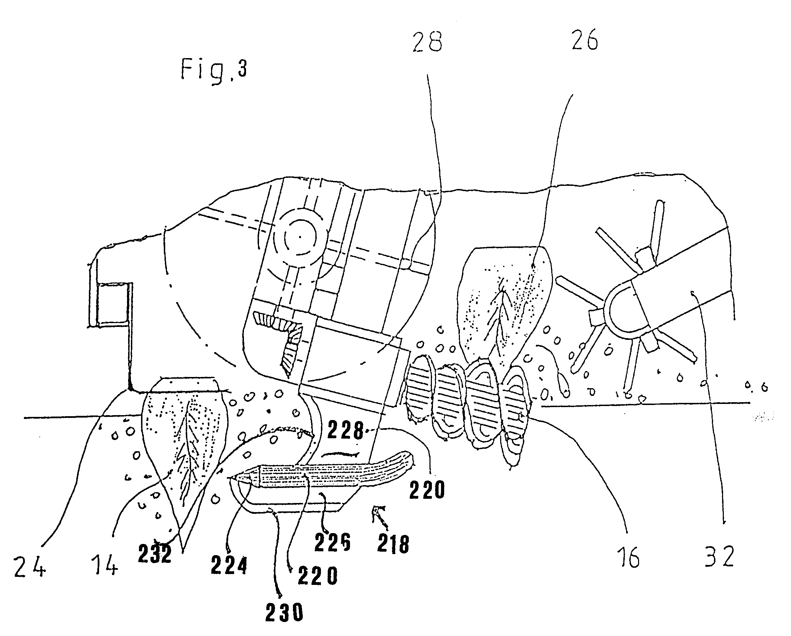

In den Fig. 1 und 2 ist in Seitendarstellung jeweils eine Vorrichtung (10) bzw. (12) zum Roden von Wurzelfrüchten (14) dargestellt. Dabei werden gleiche Elemente mit gleichen Bezugszeichen versehen. Die Vorrichtung (10) bzw. (12) umfaßt in Fahrtrichtung einen V-förmig geöffneten Einlaufkanal bildende Rodewalzen (16), die Hauptschare bilden. Die Längsachse der Rodewalze (16) kann dabei waagerecht oder nahezu waagerecht angeordnet sein, wobei sie im Bereich ihres hinteren Endes tiefer in das Erdreich eingreift als vorne. Dem Hauptschar (16) ist jeweils ein Vorschar (18) bzw. (20) vorgeschaltet, um ein Lockern des Erdreiches zu beiden Seiten der zu rodenden Wurzelfrüchte (14) zu erleichtern. Hierdurch ergibt sich der Vorteil, daß die von den Hauptscharen bzw. Rodewalzen (16) erfaßten Wurzelfrüchte (14) insbesondere bei trockenen, lehmigen Böden leichter ausgehoben werden können. Zu diesem Zweck können die vorzugsweise plattenförmig ausgebildeten Vorschare (18), (20) trapezförmig, keilförmig oder entsprechend der besonders hervorzuhebenden Ausführungsformen nach Fig. 3 bis 5 ausgebildet sein. In der von jedem Vorschar (18) bzw. (20) aufgespannten Ebene liegt vorzugsweise die Drehachse der Hauptschare (16). Dabei bilden die Vorschare (18) bzw. (20) ebenfalls einen V-förmigen Kanal. Zusätzlich können die Vorschare (18) und (20) in Vibration versetzt werden, um ein Lockern des Erdreiches zu verstärken.

Den Vorscharen (20) ist ein an und für sich bekanntes Tastelement (24) vorgeordnet, damit die Vorrichtung (10) bzw. (12) auf die Spur der zu rodenden Wurzelfrüchte (14) ausgerichtet wird, damit also die Wurzelfrüchte möglichst genau zwischen den Vorscharen (18) und (20) und Hauptscharen (16) liegen.

Die angehobenen Wurzelfrüchte (26) können nach dem Ausführungsbeispiel der Fig. 2 von einem elastischen Drehflügler (28), der über einen Endlosantrieb (30) in Drehbewegung versetzt wird, weiter angehoben werden, um einen möglichen Stau zu verhindern. Von den Hauptscharen (16) bzw. dem Drehflügler (28) gelangen die Wurzelfrüchte (26) über eine Transportvorrichtung (32) in eine Reinigungsstation (72).

Die Vorrichtungen (10) und (12), die im Ausführungsbeispiel von einem Schlepper geschoben werden können, von dem ein Rad (134) bzw. (136) angedeutet ist, werden von einem Grundrahmen (130) bzw. (132) aufgenommen, der so gelagert ist, daß eine Höhen- und Seitenverstellbarkeit zum Schlepper möglich ist. Hierdurch ist gewährleistet, daß eine problemlose Anpassung der Position der Hauptschare (16) und (18), Vorschare (20) an die Bodenoberfläche gegeben ist. Zusätzlich können Reinigungsvorrichtungen (138) für die Räder (134) bzw. (136) vorgesehen sein, die anhand der Fig. 2 angedeutet sind.

Die Vorrichtungen (10) und (12) können geschoben, gezogen oder selbstfahrend ausgebildet werden.

Ferner sei erwähnt, daß die für die Vorrichtungen (10) und (12) erforderliche Hydraulik und der für die Reinigungsstation benötigte Druck für das Fluidgemisch von einem oder mehreren Freiflugkolbenmotoren, insbesondere Stelzer-Motoren betätigt bzw. erzeugt werden können.

Den Fig. 3 bis 5 sind besonders hervorzuhebende Ausgestaltungen einer erfindungsgemäßen Vorrichtung zu entnehmen, soweit es die Schare betrifft. So zeigt die Fig. 3, daß dem Hauptschar (16) ein Vorschar (218) vorgeschaltet ist. Das Schar (218) besteht im wesentlichen aus einem plattenförmigen Element (220), das einen zylinderförmigen z. B. durch ein Rundstahl gebildeten beim Roden vorzugsweise parallel zur Bodenoberfläche verlaufenden zylinderförmigen Abschnitt (222) aufweist, der an seinem vorderen Ende (224) spitz zulaufend ausgebildet ist. Hierdurch ist ein Auflockern des Erdreiches gewährleistet. Die oberhalb und unterhalb des Abschnitts (222) verlaufenden plattenförmigen Abschnitte (226) und (228) weisen an ihren freien vorderen Kanten (230) bzw. (232) Schneiden auf bzw. sind schneidförmig ausgebildet. Durch die Kante (232) des oberhalb des Abschnittes (220) verlaufenden Bereichs (228) ist gewährleistet, daß Unkräuter, Blätter und ähnliches, die am Erdboden vorliegen, ins Erdreich gezogen und abgeschnitten werden, so daß der von den Scharen (218) bzw. (216) gebildete Einlaufkanal nicht verstopfbar ist. Das Ziehen der Unkräuter ins Erdreich wird dadurch gewährleistet, daß die Schneidkante (232) sich entgegen der Roderichtung bereichsweise schräg nach hinter erstreckt, also quasi eine Sichel bildet.

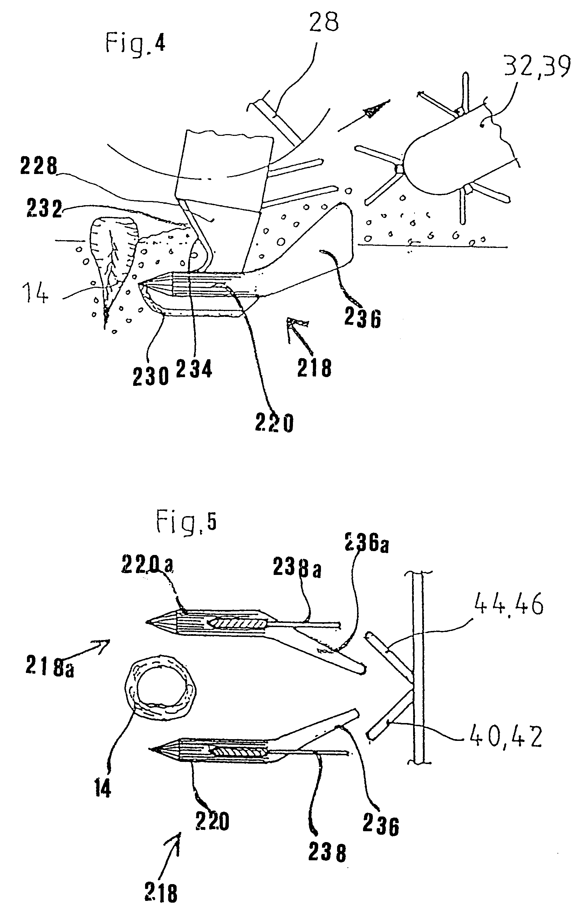

Diese Merkmale sind insbesondere auch anhand der Fig. 4 und 5 klar ersichtlich. Man erkennt die nach hinten gerichtete Schräge (234) der Schneidkante (232) im Bereich (228) des plattenförmigen Vorschars (218). Durch diese Schräge (234) erfolgt erkennbar ein problemloses Hereinziehen von Unkraut, Blättern und ähnliches in das Erdreich.

Der erwähntermaßen aus Rundstahl bestehende, spitz zulaufende zylinderförmige Abschnitt (220) ist im Ausführungsbeispiel der Fig. 4 und 5 in Richtung des Förderorgans (32), (39) durch Flachschmieden plattenförmig ausgebildet, um als Leitblech (236) zu wirken, das sich in Richtung des Förderorgans (32), (39) erstreckt.

Wie die Draufsicht nach Fig. 5 zeigt, ist das Leitelement bzw. Leitblech ( 236) bzw. (236a) in Richtung des anderen Vorschars (220a) bzw. (220) abgewinkelt, um einen V-förmigen Kanal zu bilden, durch den die Wurzelfrüchte (14) zu dem Förderorgan (32) gelangen. Ansonsten entspricht die Konstruktion des ein Hauptschar ergänzenden Vorschars (218) der der Fig. 3. Zusätzlich gehen von den Bereichen (228) stabförmige Elemente (238) bzw. (238a) aus, die als Führung für die gerodeten Wurzelfrüchte (14) dienen.

## Patentansprüche

1.  Vorrichtung (10, 12) zum Roden von Wurzelfrüchten (14) wie Zuckerrüben umfassend zumindest zwei in das Erdreich eingreifende Hauptschare (16) mit einen jeweils vorgeschalteten Vorschar (18, 20, 218, 218a), wobei die Hauptschare (16) einen in Fahrtrichtung der Vorrichtung V-förmig geöffneten Einlaufkanal für die Wurzelfrüchte bilden und aus jeweils eine um ihre jeweilige Längsachse sich drehende Rodewalze (16) bestehen und wobei gegebenenfalls sowohl eine den Rodewalzen (16) nachgeordnete Transporteinrichtung (32) als auch eine Reinigungsstation (72) vorgesehen ist,
    **dadurch gekennzeichnet,**
    daß das Vorschar (18, 20, 218, 218a) im wesentlichen plattenförmig ausgebildet ist und einen beim Roden im Erdreich verlaufenden im vorderen Bereich spitz zulaufenden zylinderförmigen Abschnitt (220, 220a) aufweist, daß zumindest oberhalb des Abschnitts die Vorderkante (232, 234) des Vorschars schneidartig ausgebildet ist und daß unterhalb des zylinderförmigen Abschnitts (220, 220a) das Vorschar platten- oder stegförmig ausgebildet ist und in seinen freien vorderen und unteren Bereichen als Schneide (230) wirkt.

2.  Vorrichtung nach Anspruch 1,
    **dadurch gekennzeichnet,**
    daß die oberhalb des zylinderförmigen Abschnitts (220, 220a) verlaufende als Schneide wirkende Vorderkante (234) entgegen der Roderichtung schräg nach hinten verlaufend ausgebildet ist.

## Claims

1.  Device (10, 12) for digging up root crops (14) such as sugar beets comprising at least two main plowshares (16) being in engagement with the soil, each having a foreward-mounted plow (18, 20, 218, 218a), said main plowshares (16) form a V-shaped intake trough for the root crops opening in the direction of motion and each consist of one grubbing cylinder (16) revolving around its longitudinal axis, and if necessary provision is made for a conveyor (32) as well as a cleaning station (72) to be attached behind the grubbing cylinder (16),
    **wherein,**
    said forward plow (18, 20, 218, 218a) is essentially flat and has a conical section (220, 220a), pointed towards the front, cutting through the soil, at least above said section the front edge (232, 234) of the forward plow is designed as a cutting edge and below the cylinder-shaped section (220, 220a) the forward plow is designed as a plate or ridge and acts as a blade (230) at its free front and lower edges.

2.  Device according to Claim 1,
    **wherein,**
    above the cylinder-shaped section (220, 220a) the front edge (234), designed as a cutting edge, facing the grubbing direction, slants downwards towards the rear.

## Revendications

1.  Dispositif (10, 12) pour arracher des racines (14) telles que des betteraves sucrières, comprenant au moins deux socs principaux (16) pénétrant dans le sol, chaque soc étant précédé d'un soc avant (18, 20, 218, 218a), les socs principaux (16) formant un canal d'entrée pour les racines, canal ouvert en forme de V dans la direction de déplacement du dispositif et un cylindre d'arrachage (16), respectif tournant sur un axe longitudinal correspondant, et le cas échéant un dispositif de transport (32) en aval des cylindres d'arrachage (16) ainsi qu'un poste de nettoyage (72), dispositif caractérisé en ce que le soc amont (18, 20, 218, 218a) est essentiellement en forme de plaque et comporte un segment (220, 220a) cylindrique, se terminant en pointe dans la zone avant pour passer dans la terre lors de l'arrachage, et en ce qu'au moins au-dessus du segment, l'arête avant (232, 234) du soc avant est en forme d'arête coupante et en ce qu'en-dessous du segment cylindrique (220, 220a), le soc avant est en forme de plaque ou d'entretoise et a une fonction d'arête de coupe (230) dans ses zones avant et inférieure.

2. Dispositif selon la revendication 1, caractérisé en ce que l'arête avant (234) qui fonctionne comme arête de coupe au-dessus du segment de forme cylindrique (220, 220a) est dirigée vers l'arrière, en biais, à l'opposé de la direction d'arrachage.

Fig. 1

EP 0 264 891 B1

Fig. 2

Fig.3

28    26

24    14    232    224    220    226    218    16    32

228    220

230

EP 0 264 891 B1

8

Fig.4

Fig.5